# EUROPEAN PATENT SPECIFICATION

(11) **EP 0 508 808 B1**
(45) Date of publication and mention of the grant of the patent: **15.11.1995**
(21) Application number: 92303220.5
(22) Date of filing: 10.04.1992
(51) Int. Cl.: A01K 97/20

(54) **Angler's keep net**
Aufbewahrungsnetz für Angler
Filet de garde pour pêcheurs

(30) Priority: 12.04.1991 GB 9107838
(43) Date of publication of application: 14.10.1992
(73) Proprietor: Piper, Michael Adrian, Tenterden, Kent TN30 7JT (GB); Piper, Timothy Scott, Tenterden, Kent TN30 7JT (GB)
(72) Inventor: Thomas, Christoper Plowden, Staplehurst, Kent (GB)
(74) Representative: Harrison, David Christopher

(56) References cited:
- WO-A-85/05537

## Description

The present invention relates to nets for holding live fish.

It is well known for anglers to use keep nets for holding their catch in the water and keeping it alive. The known nets comprise cylindrical netting which is closed at one end, having rings spaced at intervals along the length of the net for holding the net open.

Anglers frequently have to return the fish that they catch to the water. It is important, therefore, that the fish should suffer as little harm as possible when caught.

WO-A-8505537 discloses an angler's keep net comprising support rings spaced along its length.

Nets which are known in the prior art have a tendency to twist or collapse, e.g. at the unsupported regions of netting between the support rings. This has the effect that the internal cross-sectional area of the net at that region is reduced. Thus, such twisting greatly increases the likelihood of fish rubbing against the netting, which is harmful to them as the abrasive action of the netting removes scales from their skin.

The present invention aims to reduce this damage to fish caused by the keep net, by providing nets which have a greater resistance to twisting or collapse.

The keep net of the present invention comprises a tube or tunnel of netting which is engaged by a helical spring which urges the netting into a longitudinally extended state.

A second support is preferably provided at or towards the closed end of the net with the spring running the whole length between the first and second supports. The helical spring has sufficient resilience to resist twisting and transverse collapse of the net when in an extended condition, but is easily folded longitudinally for ease of storage.

The spring may be connected to the supports by a flexible connection so that folding is possible without stressing the connection. Alternatively the spring may be integrally formed with the second support or both supports.

The spring and supports are preferably formed from a plastics material, such as high density polythene or uPVC.

The spring is preferably attached to the netting by sewing the netting to the spring. This may be done so that the spring is within a sleeve formed by the netting. In the manufacture of nets according to the present invention, the sewing step may be carried out when the net is in an extended condition so that the spring turns lie at an oblique angle to the warp and weft directions of the netting.

The netting may be in the form of a tube of, e.g. circular or rectangular cross section. In a preferred embodiment the spring is slideably connected to the first support, further improving resistance to twisting or collapse of the net.

The present invention will be described by way of example with reference to the embodiments shown in the accompanying drawings in which:
Fig 1 shows an embodiment of the net of the present invention;
Fig 2 shows a section through a connection between a spring and support;
Fig 3 shows a view of a connection between the spring and a second support;
Fig 4 shows a view taken at right angles to Fig 3.

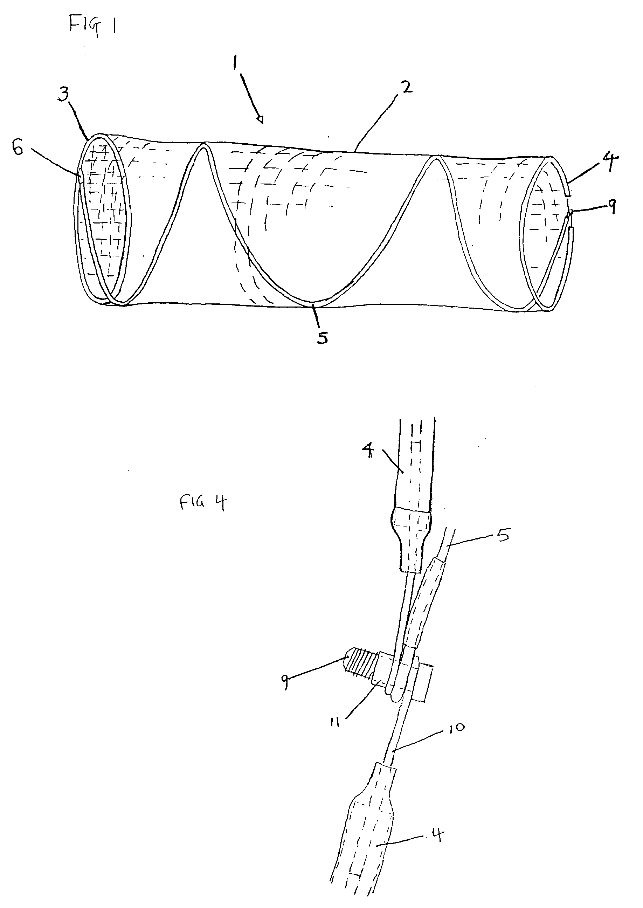

Fig 1 shows a keep net 1 which has an elongate cylindrical length of netting 2 closed at a first end, and held spread by a support in the form of a resilient hoop 3. A second resilient hoop 4 is sewn into an opposite, open end, and a helical spring 5 of plastics material runs lengthwise of the netting between the hoops 3,4.

The netting 2 is sewn around the spring 5 as will be described in more detail later. The pitch between coils of the spring 5 is typically between about 12 to 15 inches (30 to 43 cm) when the net 2 is longitudinally extended. The diameter of the net 1 is suitably from about 15 to 20 inches (38 to 51 cm).

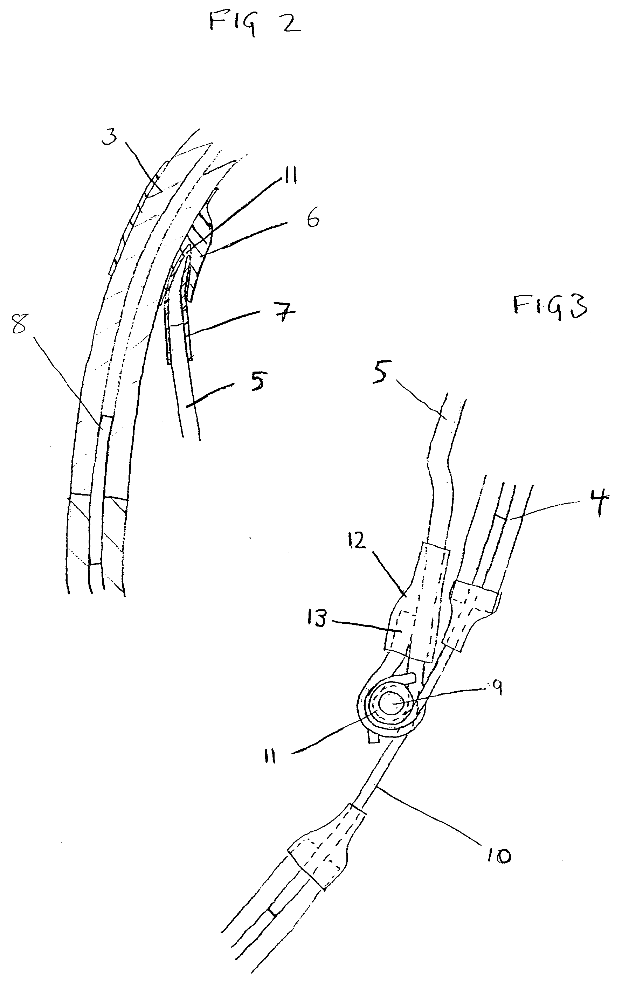

An end portion of the spring 5 locates in a flexible elastomeric or plastics sheath 7 which provides a flexible connection between the spring 5 and the hoop 3. The sheath 7 extends beyond the end of the spring 5 and fits into a cavity 11 provided in a projecting socket 6 extending from the hoop 3, as shown in Fig 2. The sheath 7 is then fixed in place in the cavity 11 by an adhesive. The hoop 3 is a hollow tube with a bridging member 8 inserted in the end portions thereof. The bridging member 8 is approximately 6 or 7 inches (15 to 18 cm) long. The hoop 3, socket 6 and the bridging member 8 are all formed of an elastomeric or a plastics material, such as uPVC or polythene, which is advantageous in providing good adhesive bond between the components. The plastics material of the spring may form a casing for an inner stiffening core.

The open end of the net 1 has a different connection to the spring 5. This is shown in Figs 3 and 4. A threaded bolt 9 is provided for attachment of a handle (not shown). The end portion 13 of the spring 5 is looped around the bolt 9 and bonded to the spring 5 within an elastomeric or plastics sheath 12 by an adhesive. The hoop 4 is formed from a length of hollow tubing joined by a metal member 10 extending about 3 or 4 inches (7 to 10 cm) into its ends. The portion of each metal member 10 which extends outside the elastomeric or plastics outer layer of the hoop 4 is looped around the bolt 9. A nut 11 screwed onto the bolt 9 fixes the hoop 4 and the end portion of the spring 5.

The net is preferably formed by first inserting metal members 10 into the ends of a hollow tube of elastomeric or plastics material such as uPVC or polythene. The tube ends are then shrink welded to form a strong bond to the metal member 10. This tube is then bent to form the hoop 4 for the open end of the net. A tube forming the other hoop 3 for the closed end of the net 1 is bent into a circle, the bridging member 8 is inserted into its two ends, and by shrink welding the tube is bonded to the bridging member 8.

The helical spring 5 is then connected to the hoops 3,4 and then the tube of netting 2 is pulled over the hoops.

When the net 1 is in an extended state, with its warp and weft directions running axially in planes diagonal to the longitudinal axis of the net 1, a sleeve to retain the spring 5 is formed by fastening the netting 2 around the spring 5, for example by sewing. The netting 2 can also be fastened to the hoops 3,4 in the same way.

In alternative embodiments of the invention the tube of netting 2 may have a rectangular or other cross section, further supports may be added between the open and closed ends of the net 1 and the support at the closed end of the net 1 may be integrally formed with the spring 5, thereby eliminating the need for the sheath 7 and projecting socket 6.

In a further preferred embodiment the end of the spring 5 is attached to the support 4 at the open end of the net by a ring which can slide freely on the support. It is found that such a connection helps to maintain the net 1 in a longitudinally extended state and helps resist the net collapsing or twisting.

## Claims

1. An angler's keep net (1) of which a tube or tunnel of netting (2) is engaged by a helical spring (5) which urges the netting into a longitudinally extended state.

2. An angler's keep net according to claim 1 wherein a hoop-like support is secured to the spring at one end of the tube or tunnel to maintain said end open.

3. An angler's keep net according to claim 2 wherein the spring is secured to said support in a peripherally slideable manner.

4. An angler's keep net according to claim 2 or claim 3 wherein the spring extends between opposed hoop-like supports.

5. An angler's keep net according to claim 4 wherein the hoop-like support opposite said open end support is integral with the spring.

6. An angler's keep net according to any one of claims 2 to 5 wherein the or each hoop-like support is formed from a hollow tubular member with a joining insert into the interior of the member for forming the member into a closed hoop shape.

7. An angler's keep net according to any one of the preceding claims wherein the netting is stitched to the spring.

8. An angler's keep net according to claim 7 wherein the netting is stitched around the spring to form a sleeve.

## Patentansprüche

1. Ein Angler's Aufbewahrungsnetz (1), bei dem eine Röhre oder ein Tunnel aus Netzgewebe (2) verbunden ist mit einer spiralförmigen Feder (5), welche das Netzgewebe in eine sich länglich erstreckende Form bringt.

2. Ein Angler's Aufbewahrungsnetz gemäß Anspruch 1, bei dem an einem Ende der Röhre ein ring-ähnlicher Halter befestigt ist, welcher das Netz offen halt.

3. Ein Angler's Aufbewahrungsnetz gemäß Anspruch 2, bei dem die Feder an dem oben erwähnten Halter in der Weise befestigt ist, daß sie sich in einer randlich gleitenden Weise bewegt.

4. Ein Angler's Aufbewahrungsnetz (1) gemäß Anspruch 2 oder Anspruch 3, bei dem sich die Feder ausdehnt zwischen den beiden gegenüberliegenden ring-ähnlichen Haltern.

5. Ein Angler's Aufbewahrungsnetz (1) gemäß Anspruch 4, bei dem sich, gegenüber dem offenen Ende der Röhre, einer der oben erwähnten ring-ähnlichen Halter befindet, der Teil der Feder ist.

6. Ein Angler's Aufbewahrungsnetz (1) gemäß irgendeiner der Anspruch 2 bis 5, bei dem ein oder beide ring-ähnlichen Halter aus einem hohl-förmigen Gegenstand bestehen, die mit einer Einlage im Innern des Gegenstandes untereinander verbundenen sind und ihm somit eine geschlossene ring-ähnliche Form geben.

7. Ein Angler's Aufbewahrungsnetz (1) gemäß irgendwelcher bisher erwähnter Anspruche, bei dem das Netzgewebe mit der Feder vernäht ist.

8. Ein Angler's Aufbewahrungsnetz (1) gemäß Anspruch 7, bei dem das Netzgewebe um die Feder in der Art genäht ist, daß es debei einen Ärmel formt.

## Revendications

1. Un filet d'entreposage de pêcheur de laquelle un tube de filetage (2) est engagé par un ressort hélicoîde qui encourage le filetage à s'allonger longitudinalement.

2. Un filet de pêcheur selon revendication 1, dans laquelle un soutlen en forme de cerceau est attaché au ressort d'un bout du tube pour qu'il reste ouvert.

3. Un filet de pêcheur selon revendication 2, dans laquelle le ressort est attaché au soutlen de façon à ce qu'il glisse vers la périphérie.

4. Un filet de pêcheur selon revendications 2 ou 3, dans laquelle le ressort s'étend entre les soutlens opposés en forme de cerceau.

5. Un filet de pêcheur selon revendication 4, dans laquelle le soutlen en forme de cerceau en face de soutien ouvert décrit ci-dessus est intégral avec le ressort.

6. Un filet de pêcheur selon aucune des revendications 2 à 5, selon laquelle chaque soutien en forme de cerceau est construit d'une pièce creuse tubiforme avec une insertion à l'intérieure de la pièce pour la rendre en forme de cerceau fermé.

7. Un filet de pêcheur selon aucune des revendications ci-dessus, dans laquelle le filetage est cousu au ressort.

8. Un filet de pêcheur selon revendication 7, dans laquelle le filetage est cousu autour du ressort pour former une manche.
